# DEMANDE DE BREVET EUROPEEN

(11) **EP 3 275 954 A1**
(43) Date de publication de la demande: **31.01.2018**
(21) Numéro de dépôt: 17182907.0
(22) Date de dépôt: 25.07.2017
(51) Int. Cl.: C09D 167/04

(54) **PROCÉDÉ DE PRÉPARATION D'UNE SOLUTION POSSÉDANT DES PROPRIÉTÉS HYDROPHOBES**

(30) Priorité: 29.07.2016 FR 1657354
(71) Demandeur: Berkem Developpement, 33290 Blanquefort (FR)
(72) Inventeur: FAHY, Olivier, 33000 BORDEAUX (FR); MESSAOUDI, Daouïa, 69800 SAINT-PRIEST (FR); CUBIZOLLES, Laurent, 33490 CAUDROT (FR)
(74) Mandataire: Ipside

(57) **Abrégé**

La présente invention se rapporte à un procédé de préparation d'une solution possédant des propriétés hydrophobes, comportant une étape de dissolution de Poly-Lactide-Acide dans un solvant à base de DiChloroMéthane à une température comprise entre 20°C et 80°C, de façon à obtenir une émulsion dans l'eau, ce qui permet d'obtenir une solution aqueuse comportant entre 2 % et 6 % de Poly-Lactide-Acide

## Description

### Domaine de l'invention

La présente invention se rapporte au domaine de la chimie.

La présente invention se rapporte plus particulièrement à un procédé de préparation d'une solution possédant des propriétés hydrophobes.

### Etat de la technique

Divers procédés pour le traitement du bois ont été proposés dans l'état de la technique.

Il existe un besoin dans l'état de la technique de développer des composés possédant des propriétés hydrophobes.

### Exposé de l'invention

La présente invention entend remédier aux inconvénients de l'art antérieur en proposant un procédé de préparation d'une solution possédant des propriétés hydrophobes basé sur l'utilisation du Poly-Lactide Acide.

A cet effet, la présente invention concerne, dans son acception la plus générale, un procédé de préparation d'une solution possédant des propriétés hydrophobes, comportant une étape de dissolution de Poly-Lactide-Acide dans un solvant à base de DiChloroMéthane à une température comprise entre 20°C et 80°C, de façon à obtenir une émulsion dans l'eau, ce qui permet d'obtenir une solution aqueuse comportant entre 2 % et 6 % de Poly-Lactide-Acide.

La solution ainsi obtenue présente les avantages suivants : elle est écologique, biologique, biodégradable et convient à un contact avec des produits alimentaires.

De préférence, ladite dissolution de Poly-Lactide-Acide dans un solvant à base de DiChloroMéthane a lieu à une température sensiblement égale à 25°C.

Avantageusement, ladite solution aqueuse comporte entre 3 % et 5 % de Poly-Lactide-Acide.

Selon un mode de mise en oeuvre particulier, ladite solution aqueuse comporte environ 4 % de Poly-Lactide-Acide.

De préférence, ladite solution aqueuse est appliquée sur un support contenant de la cellulose.

Selon un mode de réalisation, ladite solution aqueuse est appliquée sur du bois.

Selon un autre mode de réalisation, ladite solution aqueuse est appliquée sur du papier.

### Brève description des dessins

On comprendra mieux l'invention à l'aide de la description, faite ci-après à titre purement explicatif, d'un mode de réalisation de l'invention, en référence aux Figures dans lesquelles :
- La Figure 1 illustre une évaluation d'hydrophobie d'un support brut avant exposition en extérieur ;
- La Figure 2 représente une évaluation d'hydrophobie d'un support brut après trois mois d'exposition en extérieur ;
- La Figure 3 illustre une évaluation d'hydrophobie d'un support traité avec la solution obtenue par le procédé selon la présente invention, avant exposition en extérieur ; et
- La Figure 4 représente une évaluation d'hydrophobie d'un support traité avec la solution obtenue par le procédé selon la présente invention, après trois mois d'exposition en extérieur.

### Description détaillée de modes de réalisation de l'invention

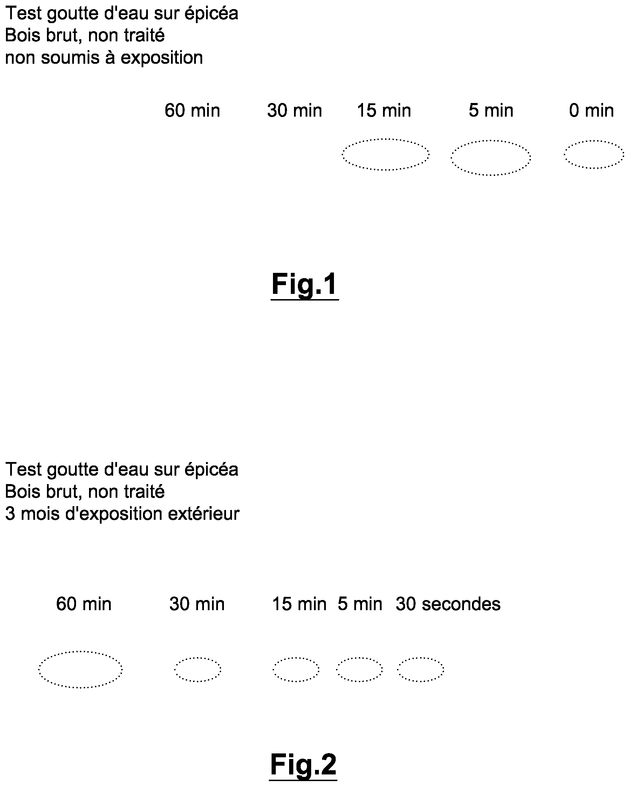

La Figure 1 illustre une évaluation d'hydrophobie d'un support brut avant exposition en extérieur.

On constate une hydrophobie naturelle, mais limitée dans le temps.

La Figure 2 représente une évaluation d'hydrophobie d'un support brut après trois mois d'exposition en extérieur.

On constate que l'exposition en extérieur diminue l'hydrophobicité naturelle du bois.

La présente invention se rapporte à un procédé de préparation d'une solution possédant des propriétés hydrophobes, comportant une étape de dissolution de Poly-Lactide-Acide dans un solvant à base de DiChloroMéthane à une température comprise entre 20°C et 80°C, de façon à obtenir une émulsion dans l'eau, ce qui permet d'obtenir une solution aqueuse comportant entre 2 % et 6 % de Poly-Lactide-Acide.

La solution ainsi obtenue présente les avantages suivants : elle est écologique, biologique, biodégradable et convient à un contact avec des produits alimentaires.

Dans un mode de réalisation, ladite dissolution de Poly-Lactide-Acide dans un solvant à base de DiChloroMéthane a lieu à une température sensiblement égale à 25°C.

Dans un mode de réalisation, ladite solution aqueuse comporte entre 3 % et 5 % de Poly-Lactide-Acide.

Dans un mode de réalisation, ladite solution aqueuse comporte environ 4 % de Poly-Lactide-Acide.

Le PLA (Poly-Lactide Acide) est fabriqué par polymérisation de lactide (d'origine naturelle), selon la formule suivante :

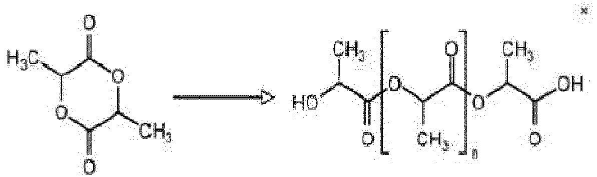

Dans un mode de réalisation, une application sur planche Epicéa est réalisée à l'aide d'une solution à 4% de PLA dans du DCM (DiChloroMéthane).

Les Inventeurs de la présente invention ont testé une pluralité de solvants, parmi lesquels le tétrahydrofurane, l'Augéo sl 191, l'acétone, l'alcool isopropylique, l'acétonitrile et le diméthylsulfoxide.

L'unique solvant qui a donné de bons résultats est le DiChloroMéthane avec une dissolution de 4% du PLA (Poly-Lactide Acide).

Dans un mode de réalisation, la dépose est de 300g/m2 soit 13.5g de PLA par m2. Les planches sont exposées à l'extérieur.

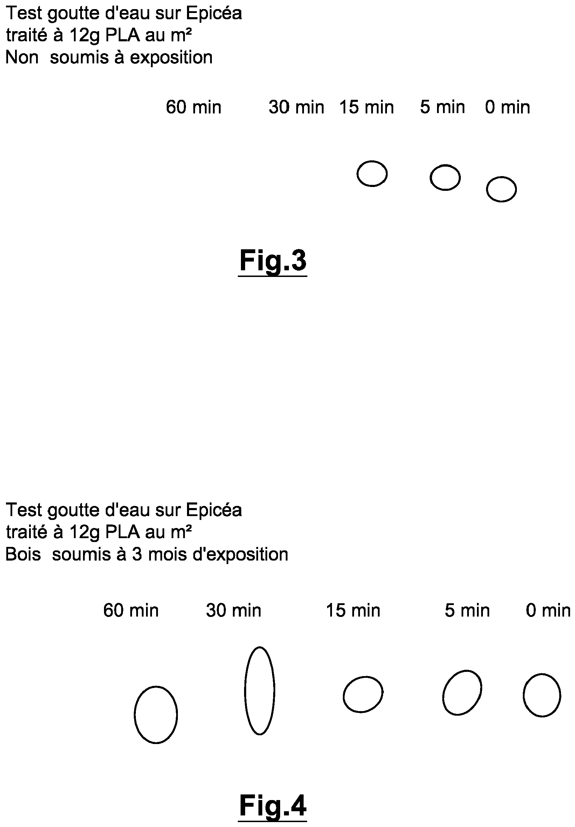

La Figure 3 illustre une évaluation d'hydrophobie d'un support traité avec la solution obtenue par le procédé selon la présente invention, avant exposition en extérieur.

On constate que le PLA (Poly-Lactide Acide) augmente l'hydrophobicité du support (voir angle de contact initial de la goutte d'eau).

La Figure 4 représente une évaluation d'hydrophobie d'un support traité avec la solution obtenue par le procédé selon la présente invention, après trois mois d'exposition en extérieur.

On observe qu'à trois mois, le PLA (Poly-Lactide Acide) renforce encore l'hydrophobie du bois. On constate une légère perte d'efficacité, mais le polymère n'était, dans le présent essai, protégé ni par un anti-UV, ni par un système de charge. De plus, le rendement appliqué de 13 g/m² était très faible.

Le procédé selon la présente invention est particulièrement adapté pour que la solution aqueuse soit appliquée sur un support contenant de la cellulose.

Dans un mode de réalisation, la solution aqueuse est appliquée sur du bois.

Dans un autre mode de réalisation, la solution aqueuse est appliquée sur du papier.

L'invention est décrite dans ce qui précède à titre d'exemple. Il est entendu que l'homme du métier est à même de réaliser différentes variantes de l'invention sans pour autant sortir du cadre du brevet.

## Revendications

1. Procédé de préparation d'une solution possédant des propriétés hydrophobes, **caractérisé en ce qu'**il comporte une étape de dissolution de Poly-Lactide-Acide dans un solvant à base de DiChloroMéthane à une température comprise entre 20°C et 80°C, de façon à obtenir une émulsion dans l'eau, ce qui permet d'obtenir une solution aqueuse comportant entre 2 % et 6 % de Poly-Lactide-Acide.

2. Procédé de préparation d'une solution possédant des propriétés hydrophobes selon la revendication 1, **caractérisé en ce que** ladite dissolution de Poly-Lactide-Acide dans un solvant à base de DiChloroMéthane a lieu à une température sensiblement égale à 25°C

3. Procédé de préparation d'une solution possédant des propriétés hydrophobes selon la revendication 1, **caractérisé en ce que** ladite solution aqueuse comporte entre 3 % et 5 % de Poly-Lactide-Acide.

4. Procédé de préparation d'une solution possédant des propriétés hydrophobes selon la revendication 3, **caractérisé en ce que** ladite solution aqueuse comporte environ 4 % de Poly-Lactide-Acide.

5. Procédé de préparation d'une solution possédant des propriétés hydrophobes selon l'une des revendications précédentes, **caractérisé en ce que** ladite solution aqueuse est appliquée sur un support contenant de la cellulose.

6. Procédé de préparation d'une solution possédant des propriétés hydrophobes selon la revendication 5, **caractérisé en ce que** ladite solution aqueuse est appliquée sur du bois.

7. Procédé de préparation d'une solution possédant des propriétés hydrophobes selon la revendication 5, **caractérisé en ce que** ladite solution aqueuse est appliquée sur du papier.
